# EUROPÄISCHE PATENTSCHRIFT

(11) **EP 2 901 100 B1**
(45) Veröffentlichungstag und Bekanntmachung des Hinweises auf die Patenterteilung: **07.11.2018**
(21) Anmeldenummer: 13773168.3
(22) Anmeldetag: 27.09.2013
(51) Int. Cl.: G01B 5/00, G01B 7/16, G01L 1/18

(54) **DEHNUNGSTRANSMITTER**
STRAIN TRANSMITTER
TRANSMETTEUR D'ALLONGEMENT

(30) Priorität: 27.09.2012 CH 17422012
(43) Veröffentlichungstag der Anmeldung: 05.08.2015
(73) Patentinhaber: Kistler Holding AG, 8408 Winterthur (CH)
(72) Erfinder: CADONAU, Thomas, CH-9523 Züberwangen (CH)
(86) Internationale Anmeldenummer: PCT/CH2013/000172
(87) Internationale Veröffentlichungsnummer: WO 2014/047743

(56) Entgegenhaltungen:
- EP-A2- 1 840 500
- GB-A- 1 456 403
- GB-A- 1 469 644
- US-A1- 2006 207 339
- US-A1- 2007 017 295

## Beschreibung

### Technisches Gebiet

Die Erfindung betrifft einen Dehnungstransmitter zum Erfassen einer Dehnung einer Struktur, umfassend einen Dehnkörper mit einer Dehnachse mit Befestigungsvorrichtungen zum Befestigen des Dehnkörpers an einer Struktur, sowie ein Messelement, welches mittig zwischen diesen Befestigungsvorrichtungen auf der Struktur auf der Dehnachse angeordnet ist.

### Stand der Technik

Dehnungstransmitter werden beispielsweise auf Maschinenstrukturen aufgebracht, um Prozesse zu überwachen. Bei Spritzgiessmaschinen wird beispielsweise die Schliesskraft der Formwerkzeuge mit Dehnungstransmittern überwacht, wobei hierfür in der Regel DMS (Dehnmessstreifen) verwendet werden. Diese liefern sehr zuverlässige Messwerte für grosse Dehnungen, die von grossen Kräften herrühren, wie sie beim Schliessen der Werkzeuge auftreten. Andererseits sollen aber auch sehr kleine Kräfte gemessen werden können: Während der Verfahrbewegung soll eine sogenannte Formschutzfunktion das Werkzeug vor Beschädigung schützen, indem das Zufahren der Formteile sofort gestoppt wird, wenn ein Bauteil nicht korrekt entformt wurde. Dazu müssen bereits kleinste Kräfte resp. Dehnungen am Werkzeug erfasst werden können.

Kleine Dehnungen können mit DMS weniger gut erfasst werden. Piezoelektrische Dehnungstransmitter hingegen eignen sich hervorragend zum Erfassen von kleinen wie auch von grossen Dehnungen, doch diese können leider nicht statisch messen.

In der GB 1456403 wird ein S-Förmiger Dehnungstransmitter angegeben, der mittig einen Chip mit einer Messbrücke umfasst, die auf Grund der ermittelten Schubspannung auf die Dehnung der Grundstruktur schliessen kann. Es hat sich gezeigt, dass die Kontaktierung eines solchen Chips sehr umständlich ist.

Die EP 1840500 offenbart einen Dehnungstransmitter mit einem Substrat aus monokristallinem Silizium mit zwei oder mehr Sensoren in Form von Wheatstoneschen Messbrücken aus diffundierten Widerständen. Die Sensoren sind unterschiedlich dotiert und auf dem Substrat verschieden ausgerichtet. Der an einer Struktur befestigte Dehnungstransmitter erfasst Dehnungen des Substrats richtungsspezifisch und gibt sie als Brückenquerspannungen der Wheatstoneschen Messbrücken aus.

Weiter zeigt die US 2007017295 einen auf einer Schraube angebrachten Dehnungstransmitter mit Dehnungssensor, Wheatstoneschen Messbrücke, Analog/Digital-Wandler, Kommunikationskontroller und Antenne. Eine Dehnung in Längsrichtung der Schraube wird vom Dehnungssensor erfasst, als Brückenquerspannung der Wheatstoneschen Messbrücke ausgegeben, vom Analog/DigitalWandler digitalisiert, vom Kommunikationskontroller in ein Radiowellensignal gewandelt und von der Antenne an einen Empfänger gesendet.

Und die US 20060207339 bezieht sich auf einen Dehnungstransmitter mit einem Dehnungssensor aus einer dünnen Metallschicht oder polykristallinem Silizium, der auf einem Substrat aus Silizium-Einkristall angeordnet ist. Der Dehnungstransmitter wird an einer Struktur befestigt und dabei so ausgerichtet, dass die Längsrichtung des Dehnungssensors parallel zur Dehnungsrichtung der zu erfassenden Dehnung der Struktur liegt.

### Darstellung der Erfindung

Aufgabe der vorliegenden Erfindung ist es, einen Dehnungstransmitter eingangs beschriebener Art anzugeben, der sowohl sehr kleine wie auch sehr grosse Messwerte erfassen kann, und der auch statisch messen kann. Zudem soll er einfach zu kontaktieren sein und auch Temperaturschwankungen an der Struktur leicht kompensieren können.

Die Aufgabe wird mit einem Dehnungstransmitter gemäß Anspruch 1 dadurch gelöst, dass das Messelement ein Blech umfasst, auf welchem ein statisch messender, zu einer Vollbrücke verschalteter, piezoresistiver Silizium Chip vollflächig angebracht ist, der eine Spannung proportional zu seiner Dehnung abgibt, wobei eine Leiterplatte am Messelement angebracht ist, die mit elektrischen Kontakten vom Silizium Chip elektrisch verbunden sind. Die Leiterplatte umfasst zum Blech isolierte Leiterbahnen, welche in einer bevorzugten Anordnung wiederum mit einem Stecker elektrisch verbunden sind, welcher ebenfalls auf dem Blech angeordnet ist. Ein solcher zu einer Vollbrücke verschalteter Silizium Chip hat eine etwa 60 mal höhere Empfindlichkeit als ein herkömmlicher, ebenfalls zu einer Vollbrücke verschalteten DMS Sensor und kann daher auch sehr tiefe Signale bis etwa einem Microstrain (1 µε), also ein 1 Mikrometer pro Meter (µm/m) erfassen. Im Gegensatz zu piezoelektrischen Sensoren gibt der zu einer Widerstandsbrücke verschaltete Silizium Chip ein Spannungssignal ab und kann statisch messen.
Da der Chip auf einem Blech angeordnet und bereits mit Kontaktierungen über eine Leiterplatte verbunden ist, kann das Messelement als solches auf seine Funktionalität überprüft werden, bevor es auf den Dehnkörper aufgebracht wird. Dadurch kann ein fehlerhafter Chip frühzeitig Identifiziert und aussortiert werden, sodass die Ausschussrate der Fertigprodukte stark reduziert werden kann.
Das Blech lässt sich auf dem Dehnkörper an seiner gesamten Umrandungen anschweissen, sodass eine dichte Verbindung entsteht.
Das Blech ist vorzugsweise auf der Unterseite des Dehnkörpers angebracht, auf welcher der Dehnkörper für die Montage an eine Montageebene der Struktur anliegt. Das Blech sollte allerdings durch einen kleinen Abstand, etwa einen Kapillarabstand von dieser Montageebene beabstandet sein, damit keine Reibung zwischen Blech und Struktur die Messung verfälscht. Die Nähe zur Struktur gewährleistet, dass die Temperatur am Messelement gleich der an der Struktur ist. Der Chip und die Leiterplatte liegen dazu auf der der Struktur abgewandter Seite des Bleches. Eine durchgehende Aussparung im Dehnkörper bis zu dessen Unterseite ermöglicht einen Zugang für einen Anschluss zum Stecker oder zu geeigneten Kontakten auf der Leiterplatte.

Die Erfindung umfasst weiter gemäß Anspruch 12 die Verwendung eines erfindungsgemäßen Dehnungstransmitters.

### Kurze Beschreibung der Zeichnungen

Im Folgenden wird die Erfindung unter Beizug der Zeichnungen näher erklärt. Es zeigen
- Fig. 1: eine schematische Darstellung eines Dehnungstransmitters nach dem Stand der Technik;
- Fig. 2: Beschreibung einer Vollbrücke zur Verwendung in einem erfindungsgemässen Dehnungstransmitter;
- Fig. 3: Darstellung eines erfindungsgemässen Dehnungstransmitters in einer bevorzugten Ausführung;
- Fig. 4: Schematische Darstellung in der Aufsicht eines Messelementes für einen erfindungsgemässen Dehnungstransmitter;
- Fig. 5: Schematische Darstellung im Schnitt eines erfindungsgemässen Dehnungstransmitters mit Verstärker, angebracht an einer Struktur.

### Wege zur Ausführung der Erfindung

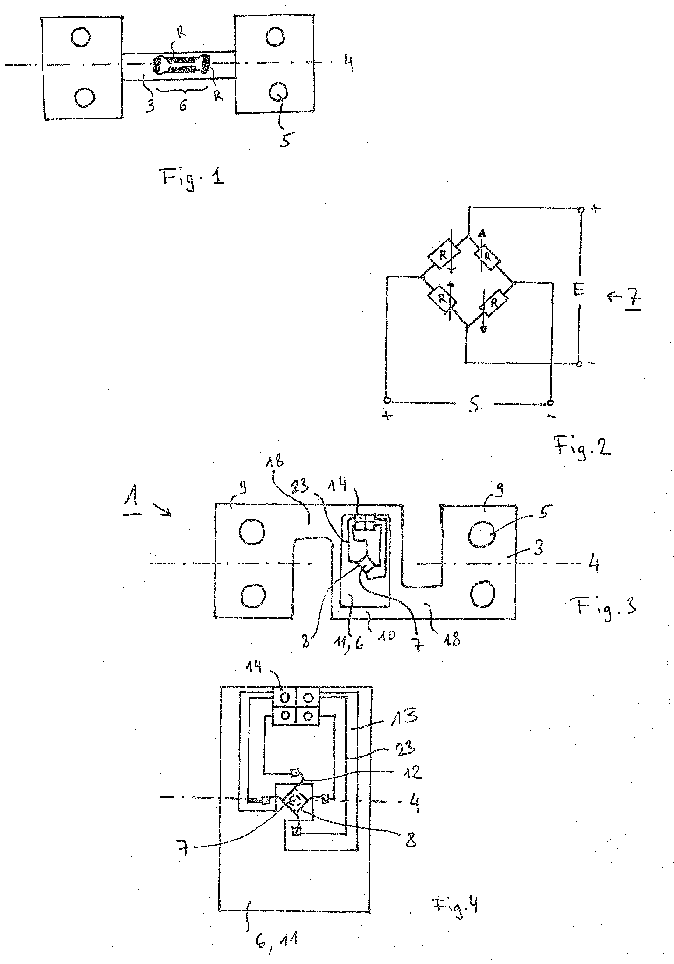

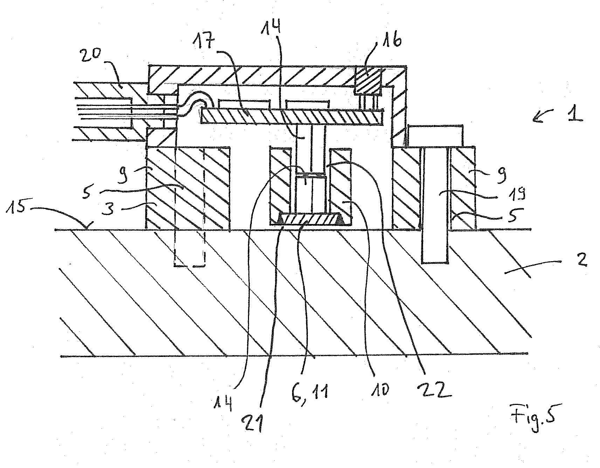

Die Erfindung betrifft einen Dehnungstransmitter 1 zum Erfassen einer Dehnung einer Struktur 2, wenn der Dehnungstransmitter 1 auf dieser angebracht ist. Fig. 3 zeigt eine bevorzugte, einfache Form eines erfindungsgemässen Dehnungstransmitters 1. In Fig. 5 ist ein Beispiel eines solchen Dehnungstransmitters 1 dargestellt, befestigt an einer Struktur 2 und umfassend einen Verstärker.

Fig. 1 zeigt einen Dehnungstransmitter 1 nach dem Stand der Technik. Er weist einen Dehnkörper 3 auf mit einer mittleren Dehnachse 4, entlang welcher der Dehnkörper 3 während einer Messung gedehnt wird. Der Dehnkörper 3 umfasst zwei Endbereiche 9 mit jeweils zwei Befestigungsvorrichtungen 5 sowie einen mittleren Bereich 10 mit einem Messelement 6, welches insbesondere auch mittig zwischen den Befestigungsvorrichtungen 5 auf der Dehnachse 4 angeordnet ist. Dieses Messelement 6 enthält vier zu einer Vollbrücke 7 verschaltete, dehnungssensitive Widerstände R, die hier jeweils parallel oder rechtwinklig zur Dehnachse angeordnet sind. In Fig. 2 wird eine Vollbrücke, wie sie bevorzugt in der erfindungsgemässen Anordnung eingesetzt wird, näher beschrieben. Je zwei gegenüberliegende Brücken zwischen den Widerständen bilden jeweils Anschlüsse für die Stromversorgung E+, E- resp. für die Spannungsabnahme S+, S- des Messsignals, das hier mit V bezeichnet wird. Im Gegensatz zu der Anordnung in Fig. 1 sind die Widerstände in der Vollbrücke 7 in Fig. 2 im 45° Winkel zur Dehnachse 4 angeordnet, was eine um etwa 50% erhöhte Empfindlichkeit des Messelements bewirkt gegenüber der Anordnung in Fig. 1.

Der erfindungsgemässe Dehnungstransmitter 1 ist mit einem Dehnkörper 3 ausgestattet, der einen Silizium Chip 8 mit einer darin integrierten Vollbrücke nach Fig. 2 umfasst, der eine Spannung proportional zu seiner Dehnung abgibt.

Fig. 3 zeigt einen erfindungsgemässen Dehnkörper 3, wie er bevorzugt in einem erfindungsgemässen Dehnungstransmitter 1 eingebaut ist. Dieser Dehnkörper 3 besitzt eine S-ähnliche Form, die auch einem gespiegelten S gleichen kann. Dieser Dehnkörper 3 weist wiederum zwei äussere Endbereiche 9 mit je zwei Befestigungsvorrichtungen 5 sowie einen mittleren Bereich 10 mit dem Messelement 6 auf. In einer erfindungsgemässen Ausführungsform sind die Verbindungen 18 des mittleren Bereichs zu den äusseren Bereichen punktsymmetrisch ausserhalb der Dehnachse 4 angeordnet. Die Dehnachse 4 verläuft daher zweimal zwischen den Befestigungsvorrichtungen 5 ausserhalb des Dehnkörpers 3. Bei einem Zug zwischen den Befestigungsvorrichtungen 5 wird der mittlere Bereich 10 des Dehnkörpers 3 gedreht und verzogen, da er nur an den Verbindungen 18 mit den Endbereichen verbunden ist. Da diese Verbindungen 18 punktsymmetrisch ausserhalb der Dehnachse 4 angeordnet sind, wirkt auf den mittleren Bereich 10 ein Moment. Vorzugsweise erfasst das Messelement 6 für den erfindungsgemässen Dehnungstransmitter Scherspannung. Dies ist von Vorteil, weil Scherspannung viel homogener auftritt als Dehnspannung.

In Fig. 4 ist ein solches Messelement 6 mit einem Blech 11 dargestellt, auf dem, vorzugsweise mittig, der Silizium Chip 8 vollflächig angebracht ist. Das Messelement 6 umfasst zudem eine Leiterplatte 13, wobei elektrische Kontakte 12 vom Silizium Chip 8 über die Leiterplatte 13 geführt sind. Die Leiterplatte 13 umfasst zumindest Leiterbahnen 23, welche isoliert auf dem Blech 11 angebracht sind. Vorzugsweise umfasst das Blech 11 einen Stecker 11, welcher an den Leiterbahnen 23 kontaktiert ist. Andernfalls kann die Leiterplatte 13 nicht dargestellte Kontaktstellen aufweisen, welche mit Anschlüssen zu einem Verstärker oder zu einer Auswerteeinheit direkt kontaktiert werden können.

Bei der Erfassung von Scherspannung ist der Silizium Chip 8 derart diagonal auf dem Blech 11 angebracht, dass der Silizium Chip 8 die Scherung in der gewünschten Richtung erfährt.

Das Messelement 6 ist vorzugsweise mit seinem Blech 11 direkt am Dehnkörper 3 an seiner gesamten Umrandung angebracht, vorzugsweise angeschweisst. So kann eine dichte Verbindung geschaffen werden. Innerhalb dieser Verschweissung weist der Dehnkörper 3 dazu insbesondere eine Aussparung 22 auf, durch die eine Verbindung zur Leiterplatte 13 hergestellt werden kann.

In Fig. 5 ist ein erfindungsgemässer Dehnungstransmitter 1 im Schnitt dargestellt, in der Dehnachse 4. Befestigungsschrauben 19 halten den Dehnungstransmitter 1, insbesondere den Dehnkörper 3, in den Endbereichen 9 an einer Struktur 2 fest. Der Dehnkörper 3 weist eine Montageebene 15 auf, an welcher er an der Struktur 2 anliegt. Da dieser Dehnkörper 3 eine S-Form aufweist gemäss Fig. 3, ist der Dehnkörper 3 nicht durchgehend dargestellt. Im mittleren Bereich 10 ist das Messelement 6 mit dem Silizium Chip 8 angeordnet.

Erfindungsgemäss liegt das Messelement 6 im montierten Zustand nur durch einen möglichst kleinen Abstand, etwa einen Kapillarabstand 21, fast der Struktur 2 an. Dies hat den Vorteil, dass die Temperatur der Struktur stets möglichst dieselbe ist wie die Temperatur am Messelement 6.

Für eine Messung am Silicium Chip 8 wird jeweils eine konstante Stromspeisung bei E+, E- angelegt. Die erfasste Spannung V zwischen S+ und S- gibt das Messsignal wieder, das durch die Dehnung am Chip verursacht wird. Am Silizium Chip 8 kann erfindungsgemäss zusätzlich zum dehnungsbedingten Spannungswert V auch die aktuelle lokale Temperatur T1 ausgelesen werden. Dazu wird die Brückenspannung zwischen E+ und E- bei konstanter Stromspeisung gemessen. Ändert sich die statische Temperatur am Chip 8, so verändern sich auch die Widerstände, ohne dass eine Dehnung am Chip vorliegt. Diese Änderung des Brückenwiderstandes kann als Änderung der Brückenspannung bei E+, E- erfasst werden, wodurch eine erste Temperatur T1 der Struktur ermittelt werden kann.

Die Dehnung der Struktur 2 kann auf Grund dieser Werte V, T1 unter Mithilfe von Eichtabellen ermittelt werden. So können statische Temperaturverhältnisse kompensiert werden. Statische Temperaturverhältnisse sind Temperaturen, welche erhöht oder tief sein können, jedoch über längere Zeit konstant sind. Messfehler, bedingt durch statische Temperaturverhältnisse, können auf die oben beschriebene Art kompensiert werden. Der Chip 8 kann demnach auch als erster Temperaturfühler ausgestaltet sein.

Vorzugsweise ist der Dehnungstransmitter 1 auch mit einem Verstärker 17 mit einem Anschluss 20 zu einer Verbindung zu einer nicht dargestellten Auswerteeinheit versehen. Insbesondere kann der Verstärker 17 auf dem Messelement 6 mit elektrischen Kontakten oder mit einem weiteren Stecker auf dem Stecker 14 aufgesteckt sein. Bei einer Fehlfunktion des Verstärkers 17 kann dieser einfach abgesteckt und ersetzt werden, ohne dass der Dehnungstransmitter 1 dafür von der Struktur 2 gelöst werden muss.

Vorzugsweise ist der Verstärker 17 ein Zweikanalverstärker mit zwei unterschiedlichen Ausgabebereichen. So kann gewährleistet werden, dass mit demselben Dehnungstransmitter sowohl sehr kleine wie auch sehr grosse Signale übermittelt werden können.

Der Verstärker 17 kann insbesondere einen zweiten Temperaturfühler 16 umfassen zum Kompensieren von Messfehlern, die von Temperaturschwankungen verursacht werden.

Unter Verwendung eines zusätzlichen Temperaturfühlers 16 kann eine zweite lokale Temperatur T2 ermittelt werden. Sobald die Temperaturen T1, T2 voneinander abweichen, herrschen keine statischen Temperaturverhältnisse mehr, sondern dynamische Temperaturschwankungen. Bei der Feststellung von ungleichen Temperaturen T1, T2 kann auf Grund von weiteren Eichkurven die ermittelte Dehnung der Struktur 2 korrigiert werden, indem die dynamischen Temperaturschwankungen kompensiert werden.

### Bezugszeichenliste

- 1: Dehnungstransmitter
- 2: Struktur
- 3: Dehnkörper
- 4: Dehnachse
- 5: Befestigungsvorrichtungen
- 6: Messelement
- 7: Vollbrücke
- 8: Silizium Chip
- 9: Endbereich
- 10: Mittlerer Bereich
- 11: Blech
- 12: Elektrische Kontakte
- 13: Leiterplatte
- 14: Stecker
- 15: Montageebene
- 16: zweiter Temperaturfühler
- 17: Verstärker
- 18: Verbindungen
- 19: Befestigungsschrauben
- 20: Anschluss
- 21: Kapillarabstand
- 22: Aussparung
- 23: Isolierte Leiterbahnen
- R: Widerstand
- E+, E-: Stromversorgung
- S+, S-: Spannungsabnehme des Messsignals
- V: Spannung zur Ermittlung der Dehnung
- T1: Temperatur am Blech und an der Struktur
- T2: Temperatur entfernt von der Struktur, Umgebungstemperatur

## Patentansprüche

1. Dehnungstransmitter (1) zum Erfassen einer Dehnung einer Struktur (2), umfassend einen Dehnkörper (3) mit einer Dehnachse (4) entlang welcher der Dehnkörper (3) während einer Messung dehnbar ist und mit Befestigungsvorrichtungen (5) zum Befestigen des Dehnkörpers (3) an einer Struktur (2), sowie ein Messelement (6), welches mittig zwischen diesen Befestigungsvorrichtungen (5) auf der Struktur (2) auf der Dehnachse (4) angeordnet ist, **dadurch gekennzeichnet, dass** das Messelement (6) ein Blech (11) umfasst, auf welchem ein statisch messender, zu einer Vollbrücke (7) verschalteter piezoresistiver Silizium Chip (8) vollflächig angebracht ist; dass das Blech (11) auf dem Dehnkörper (3) angebracht ist; dass der piezoresistive Silizium Chip (8) im gedehnten Zustand eine Spannung proportional zu seiner Dehnung abgibt; und dass das Messelement (6) eine Leiterplatte (13) umfasst, wobei elektrische Kontakte (12) vom Silizium Chip (8) über die Leiterplatte (13) als isoliert auf dem Blech (11) angebrachte Leiterbahnen (23) geführt sind.

2. Dehnungstransmitter (1) nach Anspruch 1, **dadurch gekennzeichnet, dass** das Messelement einen Stecker (14) umfasst, wobei elektrische Kontakte (12) vom Silizium Chip (8) über die Leiterplatte (13) als isoliert auf dem Blech (11) angebrachte Leiterbahnen (23) zum Stecker (14) geführt sind.

3. Dehnungstransmitter (1) nach einem der vorhergehenden Ansprüche, **dadurch gekennzeichnet, dass** die Vollbrücke (7) Widerstände umfasst, welche im 45° Winkel zur Dehnachse (4) angeordnet sind.

4. Dehnungstransmitter (1) nach einem der vorhergehenden Ansprüche, **dadurch gekennzeichnet, dass** der Dehnkörper (2) eine S-ähnliche Form aufweist mit zwei äusseren Endbereichen (9) mit den Befestigungsvorrichtungen (5) sowie mit einem mittleren Bereich (10) mit dem Messelement (6), wobei die Verbindungen des mittleren Bereichs zu den äusseren Bereichen punktsymmetrisch ausserhalb der Dehnachse (4) angeordnet sind.

5. Dehnungstransmitter (1) nach einem der vorhergehenden Ansprüche, **dadurch gekennzeichnet, dass** das Messelement (6) bei einer Dehnung des Dehnkörpers (3) eine Scherspannung erfassen kann.

6. Dehnungstransmitter (1) nach einem der vorhergehenden Ansprüche, umfassend eine Montageebene (15) des Dehnkörpers (3), an welcher der Dehnkörper (3) im montierten Zustand an der Struktur (2) anliegt, **dadurch gekennzeichnet, dass** das Messelement (6) mit einem Kapillarabstand (21) an der Struktur (2) anliegt.

7. Dehnungstransmitter (1) nach einem der vorhergehenden Ansprüche, **dadurch gekennzeichnet, dass** der Silizium Chip (8) einen ersten Temperaturfühler umfasst zum Kompensieren von Messfehlern, die von Temperaturschwankungen verursacht werden.

8. Dehnungstransmitter (1) nacheinem der vorhergehenden Ansprüche, **dadurch gekennzeichnet, dass** er einen Verstärker (17) umfasst mit einem Anschluss (20) zu einer Verbindung zu einer Auswerteeinheit.

9. Dehnungstransmitter (1) nach Anspruch 8, **dadurch gekennzeichnet, dass** der Verstärker (17) auf dem Messelement (6) mit elektrischen Kontakten (12) aufgesteckt ist, vorzugsweise auf einem Stecker (14), der auf dem Blech (8) angebracht ist.

10. Dehnungstransmitter (1) nach einem der Ansprüche 8 oder 9, **dadurch gekennzeichnet, dass** der Verstärker (17) ein Zweikanalverstärker ist mit zwei unterschiedlichen Ausgabebereichen.

11. Dehnungstransmitter (1) nach Anspruch 7 und einem der Ansprüche 8 bis 10, **dadurch gekennzeichnet, dass** der Verstärker (17) einen zweiten Temperaturfühler (16) umfasst zum Kompensieren von Messfehlern, die von dynamischen Temperaturschwankungen verursacht werden.

12. Verfahren zum Erfassen einer Dehnung einer Struktur (2) unter Verwendung eines Dehnungstransmitters (1) nach Anspruch 7 mit einem ersten Temperaturfühler, **dadurch gekennzeichnet, dass** am Silizium Chip (8) der dehnungsbedingte Spannungswert V sowie die aktuelle lokale Temperatur T1 ausgelesen wird und dass die Dehnung der Struktur (2) auf Grund dieser Werte V, T1 sowie auf Grund von Eichtabellen ermittelt wird zum Kompensieren von statischen Temperaturverhältnissen.

13. Verfahren nach Anspruch 12 unter Verwendung eines Dehnungstransmitters (1) nach Anspruch 11 mit einem zweiten Temperaturfühler (16), **dadurch gekennzeichnet, dass** am zweiten Temperaturfühler (16) eine zweite lokale Temperatur T2 ermittelt wird, wobei bei Feststellung von ungleichen Temperaturen T1, T2 die ermittelte Dehnung der Struktur (2) korrigiert wird zum Kompensieren von dynamischen Temperaturschwankungen.

## Claims

1. A strain transmitter (1) for detecting a strain of a structure (2), comprising a strain body (3) having a strain axis (4) along which the strain body (3) can be strained during a measurement, and having fastening means (5) for fastening the strain body (3) on a structure (2), as well as a measuring element (6) placed at an equal distance between said fastening means (5) along the strain axis (4) on the strain body on the structure (2), **characterized in that** said measuring element (6) comprises a metal sheet (11) on which is applied a piezo-resistive silicon chip (8) over the entire surface area of the chip wherein said silicon chip (8) conducts static measurements and is connected to a full bridge; said metal sheet (11) is mounted on the strain body (3); said piezo-resistive silicon chip (8) in its strained state generates a voltage output proportional to the amount of strain; and **in that** said measuring element (6) further comprises a circuit board (13) where electric contacts (12) are led from the silicon chip (8) across the circuit board (13) in the form of insulated conducting paths (23) attached to the metal sheet (11).

2. The strain transmitter (1) according to claim 1, **characterized in that** the measuring element comprises a connector (14) wherein electric contacts (12) are led from the silicon chip (8) across the circuit board (13) to the connector (14) in the form of insulated conducting paths (23) attached on the metal sheet (11).

3. The strain transmitter (1) according to any of the preceding claims, **characterized in that** the full bridge (7) comprises resistors that are arranged at angles of 45° to the strain axis (4).

4. The strain transmitter (1) according to any of the preceding claims, **characterized in that** said strain body (2) has an S-like shape having two outer end regions (9) supporting the fastening means (5) as well as a central region (10) supporting the measuring element (6), wherein the connections of the central region to the outer regions are arranged point-symmetrically external to the strain axis (4).

5. The strain transmitter (1) according to any of the preceding claims, **characterized in that** the measuring element (6) can detect a shear stress when the strain body (3) is strained.

6. The strain transmitter (1) according to any of the preceding claims comprising a mounting plane (15) of the strain body (3) at which the strain body (3) in the mounted state rests against the structure (2), **characterized in that** the measuring element (6) rests against the structure (2) spaced apart by a capillary separation distance (21).

7. The strain transmitter (1) according to any of the preceding claims, **characterized in that** the silicon chip (8) comprises a first temperature sensor for compensating for measurement errors caused by temperature variations.

8. The strain transmitter (1) according to any of the preceding claims, **characterized in that** it comprises an amplifier (17) having a terminal (20) for connection to an evaluation unit.

9. The strain transmitter (1) according to claim 8, **characterized in that** said amplifier (18) is mounted onto the measuring element (6) by means of electrical contacts (12), preferably onto a connector (14) mounted on the metal sheet (8).

10. The strain transmitter (1) according to any of claims 8 or 9, **characterized in that** the amplifier (17) is a twin-channel amplifier having two different output ranges.

11. The strain transmitter (1) according to claim 7 and any of claims 8 to 10, **characterized in that** said amplifier (17) comprises a second temperature sensor (16) for compensating for measurement errors caused by dynamic temperature variations.

12. A method for detecting a strain of a structure (2) using a strain transmitter (1) according to claim 7 comprising a first temperature sensor, **characterized in that** the voltage value V generated by the strain as well as the current local temperature T1 is read out at the silicon chip, and **in that** the strain of the structure (2) is determined on the basis of these values V, T1 and also by using calibration tables in order to compensate for static temperature conditions.

13. The method according to claim 12 using a strain transmitter (1) according to claim 11 comprising a second temperature sensor (16), **characterized in that** a second local temperature T2 is detected at the second temperature sensor (16) wherein if it is determined that the temperatures T1, T2 are different the strain detected on the structure (2) is corrected in order to compensate for dynamic temperature variations.

## Revendications

1. Transmetteur extensométrique (1) destiné à détecter un allongement d'une structure (2) comprenant un corps extensométrique (3) présentant un axe d'extensométrie (4) sur lequel ledit corps extensométrique (3) est extensible durant une mesure, et des dispositifs de fixation (5) servant à fixer le corps extensométrique (3) à une structure (2), ainsi qu'un élément de mesure (6) qui est disposé sur la structure (2) sur l'axe d'extensométrie (4) au milieu entre lesdits dispositifs de fixation (5), **caractérisé en ce que** l'élément de mesure (6) comprend une tôle (11) sur laquelle est appliquée, par toute sa surface, une puce de silicium (8) piézorésistive raccordée en pont complet (7) qui effectue une mesure statique; ladite tôle (11) est attachée sur le corps extensométrique (3); ladite puce à l'état allongé produit une tension proportionnelle à son allongement, et **en ce que** l'élément de mesure (6) comprend une carte imprimé (13), des contacts électriques (12) étant menés de la puce de silicium (8) à travers de la carte imprimé (13) en forme de pistes conductrices (23) isolées sur ladite tôle (11).

2. Transmetteur extensométrique (1) selon la revendication 1, **caractérisé en ce que** l'élément de mesure comprend un connecteur (14), des contacts électriques (12) étant menés de la puce de silicium (8) à travers de la carte imprimé (13) au connecteur (14) en forme de pistes conductrices (23) isolées sur ladite tôle (11).

3. Transmetteur extensométrique (1) selon l'une quelconque des revendications précédentes, **caractérisé en ce que** le pont complet (7) comprend des résistances disposées à des angles de 45° par rapport à l'axe d'extensométrie (4).

4. Transmetteur extensométrique (1) selon l'une quelconque des revendications précédentes, **caractérisé en ce que** ledit corps extensométrique (2) en forme de S comporte deux zones d'extrémité opposées (9) avec les dispositifs de fixation (5) ainsi qu'une zone centrale (10) avec l'élément de mesure (6), dans lequel les raccordements de la zone centrale aux zones d'extrémité sont disposés à symétrie ponctuelle à l'extérieur de l'axe d'extensométrie (4).

5. Transmetteur extensométrique (1) selon l'une quelconque des revendications précédentes, **caractérisé en ce que** l'élément de mesure (6) peut détecter une contrainte de cisaillement lorsque le corps extensométrique (3) est allongé.

6. Transmetteur extensométrique (1) selon l'une quelconque des revendications précédentes comprenant un plan de montage (15) du corps extensométrique (3) dans lequel le corps extensométrique (3), à l'état monté, s'appuie contre la structure (2), **caractérisé en ce que** l'élément de mesure (6) s'appuie contre la structure (2) espacé par une distance de séparation capillaire (21).

7. Transmetteur extensométrique (1) selon l'une quelconque des revendications précédentes, **caractérisé en ce que** la puce de silicium (8) comprend un premier capteur de température destiné à compenser les erreurs de mesure dues aux variations de température.

8. Transmetteur extensométrique (1) selon l'une quelconque des revendications précédentes, **caractérisé en ce qu'**il comprend un amplificateur (17) avec une borne de raccordement (20) pour son raccordement à un analyseur.

9. Transmetteur extensométrique (1) selon la revendication 8, **caractérisé en ce que** ledit amplificateur (18) est monté sur l'élément de mesure (6) au moyen des contacts électriques (12), préférablement sur un connecteur (14) monté sur le tôle (8).

10. Transmetteur extensométrique (1) selon l'une quelconque des revendications 8 ou 9, **caractérisé en ce que** ledit amplificateur (17) est un amplificateur à deux voies avec deux plages de sortie différentes.

11. Transmetteur extensométrique (1) selon la revendication 7 et selon l'une quelconque des revendications 8 à 10, **caractérisé en ce que** ledit amplificateur (17) comprend un seconde capteur de température (16) destiné à compenser les erreurs de mesure dues aux variations de température dynamiques.

12. Procédé pour détecter un allongement d'une structure (2) utilisant un transmetteur extensométrique (1) selon la revendication 7 comprenant un premier capteur de température, **caractérisé en ce que** la lecture de la valeur de tension V due à l'allongement ainsi que de la température locale actuelle T1 a lieu à la puce de silicium et **en ce que** l'allongement de la structure (2) est déterminé sur la base de ces valeurs V, T1 et en outre en utilisant les tables d'étalonnage pour compenser des conditions de température statiques.

13. Procédé selon la revendication 12 utilisant un transmetteur extensométrique (1) selon la revendication 11 comprenant un second capteur de température (16), **caractérisé en ce qu'**une seconde température locale T2 est détectée au second capteur de température (16) dans lequel, si l'on détermine que lesdites températures T1, T2 sont différentes, l'allongement détecté à la structure (2) est corrigée pour compenser des variations de température dynamiques.
